# EUROPEAN PATENT APPLICATION

(11) **EP 4 818 482 A1**
(43) Date of publication of application: **07.10.2026**
(21) Application number: 26169303.0
(22) Date of filing: 30.03.2026
(51) Int. Cl.: F01D 25/28

(54) **SYSTEM AND METHOD FOR REMOVING OR INSTALLING THE HOT SECTION OF A GAS TURBINE ENGINE**

(30) Priority: 28.03.2025 US 202519094293
(71) Applicant: Pratt & Whitney Canada Corp., Longueuil, Québec J4G 1A1 (CA)
(72) Inventor: DUROCHER, Eric S., (01BE5) Longueuil, J4G 1A1 (CA); MacFARLANE, Ian, (01BE5) Longueuil, J4G 1A1 (CA)
(74) Representative: Dehns

(57) **Abstract**

A linear guide system for use in the assembly or disassembly of a gas turbine engine (20) is provided. The gas turbine engine (20) includes an engine shaft (34) and an engine casing (29). The engine shaft is engaged with a compressor section and a turbine section and extends along an axial centerline (32). The engine casing has first and second engine casing segments (29A, 29B) that are axially separable from one another. The linear guide system includes a plurality of rail and guide block assemblies (104). Each rail and guide block assembly includes a rail head (106), a rail (108), and a guide block (110). The rail head is configured for attachment to the first engine casing (29A). The guide block is configured for attachment to the second engine casing (29B), and is configured to receive the rail in a manner that permits linear traverse of the rail relative to the guide block.

## Description

### BACKGROUND OF THE INVENTION

### 1. Technical Field

The invention relates to gas turbine engines in general, and to systems and methods for assembling and disassembling gas turbine engines in particular.

### 2. Background Information

The term "hot section removal" refers to the process of taking apart and removing the hottest components of a gas turbine engine, typically including the combustion chamber, turbine blades, and associated housing, for inspection, maintenance, or repair during a "hot section inspection" procedure, where the parts are carefully examined to determine if repair or replacement is necessary. In some instances it is possible to perform a hot section removal while the engine is still mounted on the aircraft. During the hot section removal, however, physical damage to engine components can occur. It would be very useful to have an engine configured to facilitate hot section removal in a manner that decreases the potential for engine component damage.

### SUMMARY

According to an aspect of the invention, a linear guide system for use in the assembly or disassembly of a gas turbine engine is provided. The gas turbine engine includes a compressor section, a combustor, a turbine section, an engine shaft, and an engine casing. The engine shaft is engaged with the compressor section and the turbine section and extends along an axial centerline of the engine. The engine casing has a first engine casing segment and a second engine casing segment that are axially separable from one another. The linear guide system includes a plurality of rail and guide block assemblies. Each rail and guide block assembly includes a rail head, a rail, and a guide block. The rail is fixedly attached to the rail head and extends axially out from the rail head. The rail head is configured for attachment to the first engine casing so that an axial length of the rail is disposed parallel to the axial centerline of the engine. The guide block is configured for attachment to the second engine casing, and is configured to receive the rail in a manner that permits linear traverse of the rail relative to the guide block.

In any of the aspects or embodiments described above and herein, the plurality of rail and guide block assemblies may include a first rail and guide block assembly and a second rail and guide block assembly.

In any of the aspects or embodiments described above and herein, wherein the plurality of rail and guide block assemblies may include more than two rail and guide block assemblies, and the rail and guide block assemblies may be equidistantly spaced apart from one another around a circumference of the engine casing.

In any of the aspects or embodiments described above and herein, each rail may have a cross-sectional geometry normal to the axial length of the rail that is constant along the axial length. Each rail may have a circular cross-sectional geometry. Each rail may have a rectangular cross-sectional geometry.

In any of the aspects or embodiments described above and herein, the rail and the guide block of each rail and guide block assembly may be configured as a mating male and female pair.

In any of the aspects or embodiments described above and herein, the guide block of each rail and guide block assembly may be configured to interface with the rail of the respective rail and guide block assembly for a length of the guide block.

The aspect of the invention above and any embodiments thereof may extend to an assembly comprising the linear guide system and a gas turbine engine including: a compressor section, a combustor, a turbine section, an engine shaft that is engaged with the compressor section and the turbine section and extends along an axial centerline of the engine, and an engine casing having a first engine casing segment and a second engine casing segment that are axially separable from one another. The rail head may be attached to the first engine casing so that an axial length of the rail is disposed parallel to the axial centerline of the engine. The guide block may be attached to the second engine casing, and may receive the rail in a manner that permits linear traverse of the rail relative to the guide block.

According to an aspect of the invention, a method of removing an engine module from a gas turbine engine is provided. The gas turbine engine includes a compressor section, a combustor, a turbine section, an engine shaft that is engaged with the compressor section and the turbine section and extends along an axial centerline of the engine, and an engine casing having a first engine casing segment and a second engine casing segment that are axially separable from one another. The method includes: providing a plurality of rail and guide block assemblies, wherein each rail and guide block assembly of the plurality of rail and guide block assemblies includes a rail head, a rail, and a guide block, wherein within each rail and guide block assembly the rail is fixedly attached to the rail head and extends axially out from the rail head; attaching the rail head of each rail and guide block assembly to the first engine casing segment so that an axial length of the rail is disposed parallel to the axial centerline of the engine; attaching the guide block of each rail and guide block assembly to the second engine casing segment so that the rail is received within an aperture disposed in the guide block, and the rail is disposed in the guide block in a manner that permits linear traverse of the rail relative to the guide block; wherein the engine module is attached to the first engine casing segment; and removing the engine module from the gas turbine engine by axially translating the first engine casing segment from the second engine casing segment with the plurality of rail and guide block assemblies guiding the axial translation.

In any of the aspects or embodiments described above and herein, the plurality of rail and guide block assemblies may include a first rail and guide block assembly and a second rail and guide block assembly are disposed diametrically opposite one another.

In any of the aspects or embodiments described above and herein, the engine module may include a low pressure turbine.

In any of the aspects or embodiments described above and herein, the engine module may include an output shaft configured for drive engagement with the low pressure turbine.

In any of the aspects or embodiments described above and herein, the method may include removing a high pressure turbine and a component of the combustor after the high pressure turbine is removed.

In any of the aspects or embodiments described above and herein, the method may be performed with the engine on-wing.

In any of the aspects or embodiments described above and herein, the method may be performed with the engine off-wing.

In any of the aspects or embodiments described above and herein, the method may include axially retaining the engine shaft prior to removing the engine module from the gas turbine engine.

According to an aspect of the invention, a method of installing an engine module into a gas turbine engine. The gas turbine engine includes a compressor section, a combustor, a turbine section, an engine shaft tand an engine casing. The engine shaft is engaged with the compressor section and the turbine section and extends along an axial centerline of the engine. The engine casing has a first engine casing segment and a second engine casing segment that are axially separable from one another. The method includes: providing a plurality of rail and guide block assemblies, wherein each rail and guide block assembly of the plurality of rail and guide block assemblies includes a rail head, a rail, and a guide block, wherein within each rail and guide block assembly the rail is fixedly attached to the rail head and extends axially out from the rail head; attaching the rail head of each rail and guide block assembly to the first engine casing segment; attaching the guide block of each rail and guide block assembly to the second engine casing segment; wherein the engine module is attached to the first engine casing segment; disposing the rail of each rail and guide block assembly into the guide block of that respective rail and guide block assembly; and axially translating the first engine casing segment and attached engine module into engagement with the second engine casing segment guided by the plurality of rail and guide block assemblies.

In any of the aspects or embodiments described above and herein, the engine module may include an output shaft that is configured for drive engagement with the low pressure turbine.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. The following description and drawings are intended to be exemplary in nature and non-limiting.

### BRIEF DESCRIPTION OF THE DRAWINGS

FIG. 1 is a diagrammatic illustration of a gas turbine engine that may utilize embodiments of the present disclosure.
FIG. 2 is a diagrammatic enlarged view of a portion of the engine at the aft end of a low pressure shaft of a gas turbine engine, illustrating an embodiment of the present disclosure shaft retention system disposed in a disengaged configuration.
FIG. 2A is a diagrammatic view illustrating the spring shaft received the central bore with a spline arrangement example.
FIG. 3 is a forward view of a shaft retainer cap embodiment.
FIG. 3A is a sectional view of the shaft retainer cap embodiment shown in FIG. 3 along the sectional line 3A-3A shown in FIG. 3.
FIG. 4 is an aft view of a retainer piston embodiment.
FIG. 4A is a sectional view of the retainer piston embodiment shown in FIG. 4 along the sectional line 4A-4A shown in FIG. 4.
FIG. 5 is a diagrammatic representation of a retainer piston coupled with a shaft retainer cap.
FIG. 5A is a sectional view of the diagrammatic representation of the retainer piston coupled with the shaft retainer cap shown in FIG. 5 along the sectional line 5A-5A shown in FIG. 5.
FIG. 6 is a diagrammatic enlarged view of a portion of the engine at the aft end of a low pressure shaft of a gas turbine engine, illustrating an embodiment of the present disclosure shaft retention system disposed in a disengaged configuration and including an actuating tool embodiment partially engaged.
FIG. 7 is the diagrammatic view shown in FIG. 6, now with the present disclosure shaft retention system disposed in an engaged configuration and the actuating tool embodiment fully engaged.
FIG. 8 is a diagrammatic enlarged view of a portion of the engine at the aft end of a low pressure shaft of a gas turbine engine, illustrating an embodiment of the present disclosure shaft retention system disposed in a disengaged configuration and including an actuating tool embodiment partially engaged.
FIG. 9 is the diagrammatic view shown in FIG. 8, now with the present disclosure shaft retention system disposed in an engaged configuration and the actuating tool embodiment fully engaged.
FIG. 10 is a diagrammatic view of a gas turbine engine with the propulsion unit removed and including a present disclosure linear guide system embodiment.
FIG. 11 is the diagrammatic view of FIG. 10 with the reduction gear box module removed.
FIG. 12 is the diagrammatic view of FIG. 11 with the low pressure turbine module being guided during the removal process by the linear guide system.
FIG. 13 is the diagrammatic view of FIG. 12 with the low pressure turbine module and the linear guide system now removed.
FIG. 14 is the diagrammatic view of FIG. 13 with the high pressure turbine module now removed.
FIG. 15 diagrammatically illustrates a rail and guide block embodiment.
FIG. 15A diagrammatically illustrates a rail and guide block embodiment.

### DETAILED DESCRIPTION

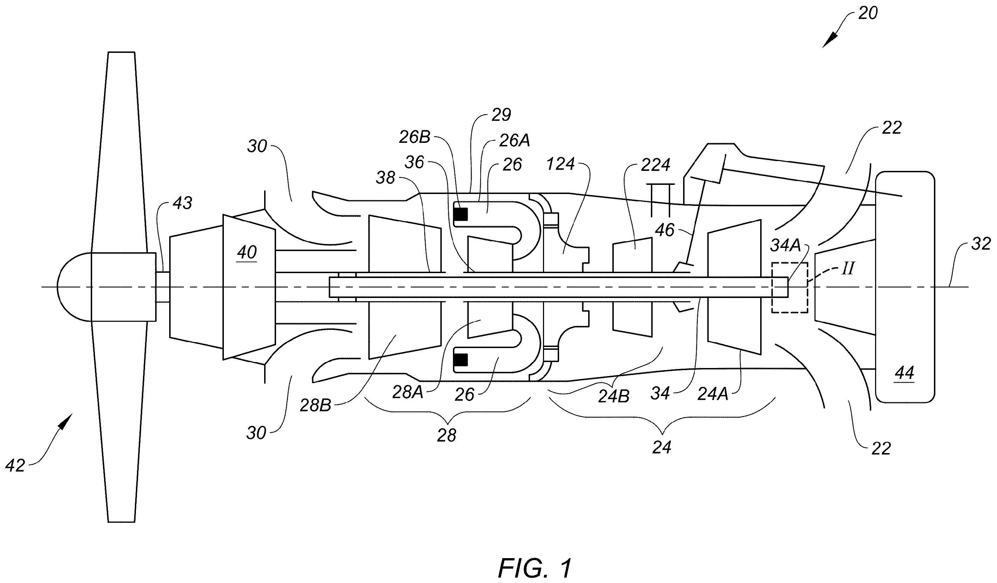

FIG. 1 diagrammatically illustrates a thermal engine in the form of a gas turbine engine 20 that includes an air inlet 22, a compressor section 24, a combustor 26, a turbine section 28, an engine casing 29, and an exhaust outlet 30 disposed on an axial centerline 32. The compressor section 24 includes a low pressure compressor (LPC 24A) and a high pressure compressor (HPC 24B). In the engine 20 embodiment shown in FIG. 1, the HPC 24B includes a centrifugal compressor stage 124 and an axial compressor stage 224. The combustor 26 includes a combustor liner 26A and fuel nozzles 26B. The turbine section 28 includes a high pressure turbine (HPT 28A) and a low pressure turbine (LPT 28B). A low pressure shaft 34 connects the LPT 28B to the LPC 24A. A high pressure shaft 36 connects the HPT 28A to the HPC 24B. An output driveshaft 38 is engaged with the low pressure shaft 34 and with a reduction gear box (RGB 40). FIG. 1 diagrammatically illustrates the engagement between the output shaft 38 and the low pressure shaft 34 in the form of a spline arrangement; e.g., the low pressure shaft 34 is diagrammatically shown received within the output driveshaft 38 with the spline arrangement therebetween. The present disclosure is not limited to this shaft arrangement; e.g., a geared arrangement may be utilized in addition to or in place of the spline arrangement to alter the relative rotational speeds of the low pressure shaft 34 and the output shaft 38. The present disclosure is not limited to a spline arrangement, a geared arrangement, or any particular engagement configuration between the low pressure shaft 34 and the output driveshaft 38. The RGB 40 is engaged with a propulsion unit 42; e.g., via a propeller shaft 43. In this example, the propulsion unit 42 includes a propeller. The present disclosure is not limited to use with propeller type propulsion units 42. In other embodiments, the propulsion unit 42 may include rotors (e.g., a helicopter or a tilt rotor aircraft), or the like. The RGB 40 permits the propulsion unit 42 to be driven at a rotational speed that is different (e.g., slower) than the rotational speed of the LPT 28B / LPC 24A.

The gas turbine engine 20 embodiment shown in FIG. 1 also includes an auxiliary gear box (AGB 44) that is driven off of the high pressure shaft 36 by a tower shaft 46 coupled with an AGB drive shaft. The present disclosure does not require an AGB 44.

The gas turbine engine 20 example shown in FIG. 1 is a reverse-flow engine having the air inlet 22 disposed at the opposite of the engine 20 from the propulsion unit 42. In terms of axial positioning along the axial centerline 32, the engine components are disposed in the following order from the forward end of the engine to the aft end of the engine: the propulsion unit 42, the RGB 40, the exhaust outlet 30, the LPT 28B, the HPT 28A and combustor 26, the HPC 24B, the LPC 24A, the air inlet 22, and the AGB 44. The combustor 26 is disposed radially outside of the HPT 28A.

Air enters the engine 20 through the air inlet 22, passes through the LPC 24A and the HPC 24B, passes into the combustor 26 where it is mixed with fuel and combusted. Any non-combusted air and the gaseous combustion byproducts (collectively referred to as "core gas") are passed into the HPT 28A, and subsequently into the LPT 28B before exiting the engine 20 via the exhaust outlet 30. The core gas provides motive power to the HPT 28A and the LPT 28B. The HPT 28A drives the high pressure shaft 36 which in turn drives the HPC 24B; e.g., including the axial compressor stage 224 and the centrifugal compressor stage 124. The LPT 28B drives the low pressure shaft 34 which in turn drives the output drive shaft 38 and the propulsion unit 42. To facilitate the description herein, the terms "downstream" and "upstream" may be used to refer to engine component positioning relative to the direction of air / core gas passing through the engine 20. For example, the compressor section 24 is upstream of the combustor 26 and the turbine section 28 is downstream of the combustor 26. The present disclosure is not limited to the particular gas turbine engine 20 configuration diagrammatically shown in FIG. 1.

Aspects of the present disclosure are directed to a system and method for removing and/or installing components disposed in the "hot section" of the engine 20. The term "hot section" as used herein refers to engine components including the combustor 26, the turbine section 28, and the exhaust outlet 30. In some embodiments, the present disclosure may include a shaft retention system 54 that allows the low pressure shaft 34 to be axially retained during assembly and disassembly. The present disclosure is not limited to any particular system for retaining the low pressure shaft 34. U.S. Patent Application No. 19/015,210, entitled "Gas Turbine Engine with Shaft Retention System and Method of Inspecting Using the Shaft Retention System" filed January 9, 2025, which is commonly assigned with the present application and hereby incorporated by reference in its entirety, discloses at least two system embodiments for retaining the low pressure shaft 34 of a gas turbine engine 20. The present disclosure system and method does not require a shaft retention system 54. In those applications of the present disclosure that utilize a shaft retention system 54, the shaft retention systems described in the U.S. Patent Application No. 19/015,210 (also described hereinafter) are examples of acceptable systems. The present disclosure is not limited to using any particular shaft retention system.

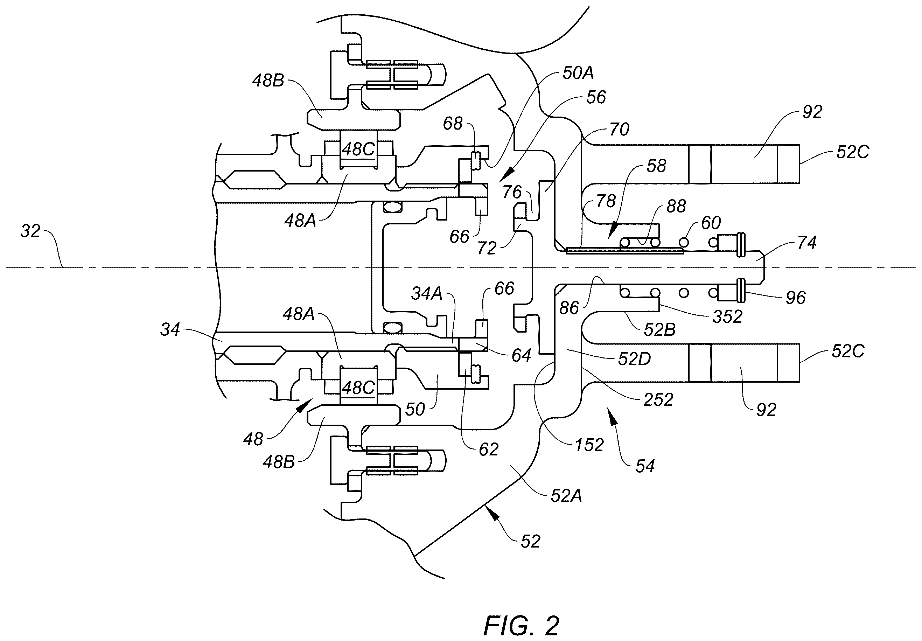

FIG. 2 is a diagrammatic enlarged view of a portion of the engine 20 at the aft end 34A of the low pressure shaft 34. FIG. 1 includes a dashed box (labeled "II") to indicate the location of the engine 20 portion diagrammatically illustrated in FIG. 2. As can be seen in FIG. 2, a bearing 48 may be disposed to rotationally support the low pressure shaft 34. The bearing 48 may include an inner race 48A, an outer race 48B, and roller elements 48C. The inner race 48A is engaged with the low pressure shaft 34 and the roller elements 48C are disposed between the inner and outer races 48A, 48B. The present disclosure is not limited to this particular bearing 48 arrangement. A shaft nut 50 is engaged with the aft end 34A of the low pressure shaft 34 and the inner race 48A of the bearing 48. A bearing housing 52 described hereinafter is coupled (e.g., via mechanical fasteners) with the outer race 48B of the bearing 48.

FIG. 2 diagrammatically illustrates a shaft retention system 54 that may be used to retain the low pressure shaft 34. The shaft retention system 54 includes a shaft retainer cap 56, a retainer piston 58, and a bearing housing 52. In some embodiments, the shaft retention system 54 may include a piston spring 60. As will be detailed herein, present disclosure shaft retention system 54 embodiments employ the retainer piston 58 to mechanically engage with the shaft retainer cap 56 to retain the low pressure shaft 34 and prevent any appreciable axial travel of the low pressure shaft 34.

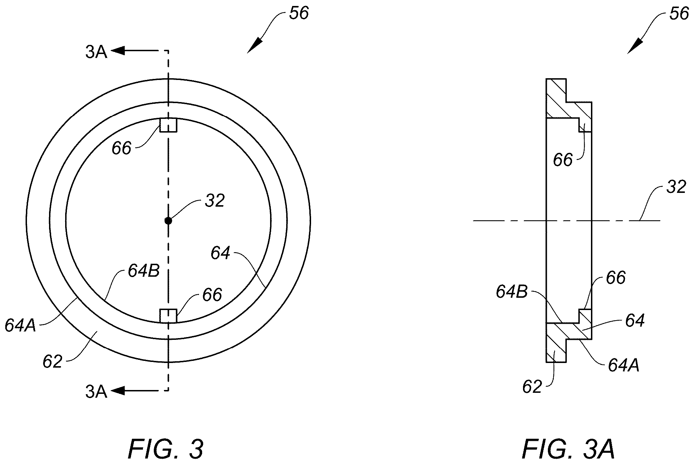

Referring to FIGS. 2, 3, and 3A, the shaft retainer cap 56 includes an outer radial flange 62, a central segment 64, and at least one lug 66. The outer radial flange 62 extends radially outward from an outer radial surface 64A of the central segment 64 and the at least one lug 66 extends radially inward from an inner radial surface 64B of the central segment 64. In the embodiment diagrammatically shown in FIGS. 2, 3, and 3A, the shaft retainer cap 56 includes a pair of lugs 66 disposed one hundred eighty degrees (180°) apart from one another. In some embodiments, the shaft retainer cap 56 may include more than two lugs 66. The present disclosure is not limited to the configuration of the shaft retainer cap 56 example shown in FIGS. 2 and 3A.

In the shaft retention system 54 diagrammatically shown in FIGS. 2, 3, and 3A, the shaft retainer cap 56 is configured to be retained with the shaft nut 50. FIG. 2 illustrates the outer radial flange 62 of the shaft retainer cap 56 disposed within a bore 50A disposed in the shaft nut 50. A retention ring 68 (e.g., a snap ring - see FIG. 2) may be used to maintain the outer radial flange 62 of the shaft retainer cap 56 within the shaft nut bore 50A. In some embodiments, the outer radial flange 62 and the shaft nut bore 50A may include mating mechanical features (e.g., a tab and slot, or an asymmetric shape, or the like - not shown) to prevent rotation of the shaft retainer cap 56 relative to the shaft nut 50.

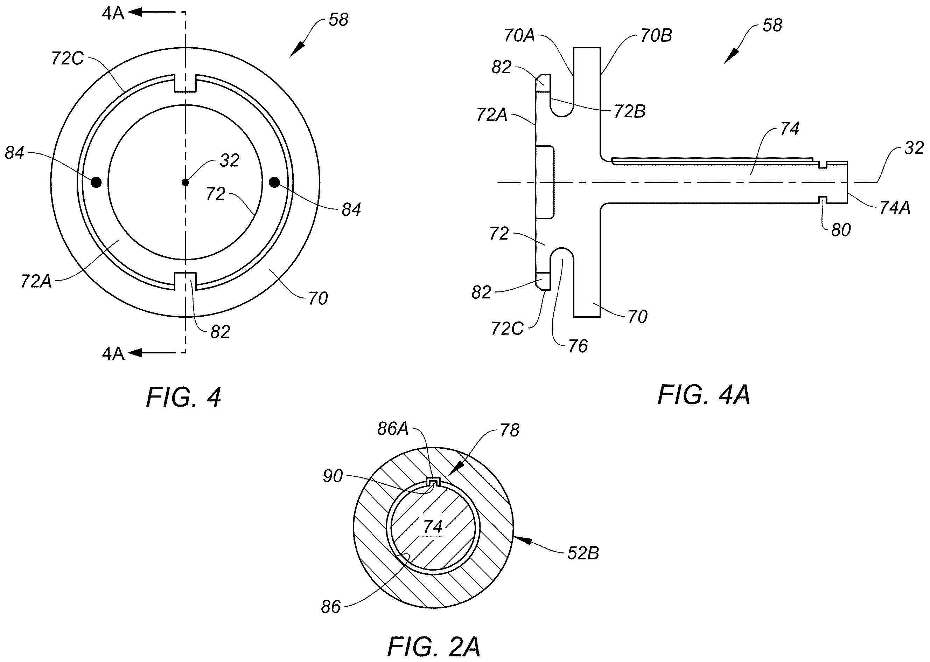

The retainer piston 58 diagrammatically shown in FIGS. 4 and 4A includes a primary flange 70, a secondary flange 72, and a spring shaft 74. The primary flange 70 (PF) includes a PF forward surface 70A and a PF aft surface 70B. The secondary flange (SF) 72 includes a SF forward surface 72A, a SF aft surface 72B, and a SF outer radial surface 72C extending between the SF forward and SF aft surfaces 72A, 72B. The forward surface 70A of the primary flange 70 and the aft surface 72B of the secondary flange 72 are axially spaced apart from one another, thereby forming an annular channel 76 therebetween. The spring shaft 74 extends axially outward from the aft surface 70B of the primary flange 70 to a spring shaft distal end 74A. In some embodiments, at least a portion of the spring shaft 74 includes a portion of a spline arrangement 78 (e.g., see FIG. 2) for engagement with the bearing housing 52 as will be detailed herein. In some embodiments, the spring shaft 74 may include a retainer channel 80 disposed adjacent the distal end 74A of the spring shaft 74. The secondary flange 72 includes at least as many slots 82 as the number of shaft retainer cap lugs 66; e.g., if the shaft retainer cap 56 includes a single lug 66, the secondary flange includes one or more slots 82. The slot(s) 82 extend radially inward from the outer radial surface 72C of the secondary flange 72 and are configured to receive the lug(s) 66 of the shaft retainer cap 56. In some embodiments, the retainer piston 58 may include one or more rotational limit features 84 configured to limit rotational movement between the retainer piston 58 and the shaft retainer cap 56. A non-limiting example of a rotational limit feature is a pin, a tab, or the like that extends into the annular channel 76 between the primary flange 70 and the secondary flange 72. FIG. 4 illustrates a pair of rotational limit features 84 in the form of pins. The present disclosure is not limited to any particular rotational limit feature 84 configuration and does not require the inclusion of rotational features 84.

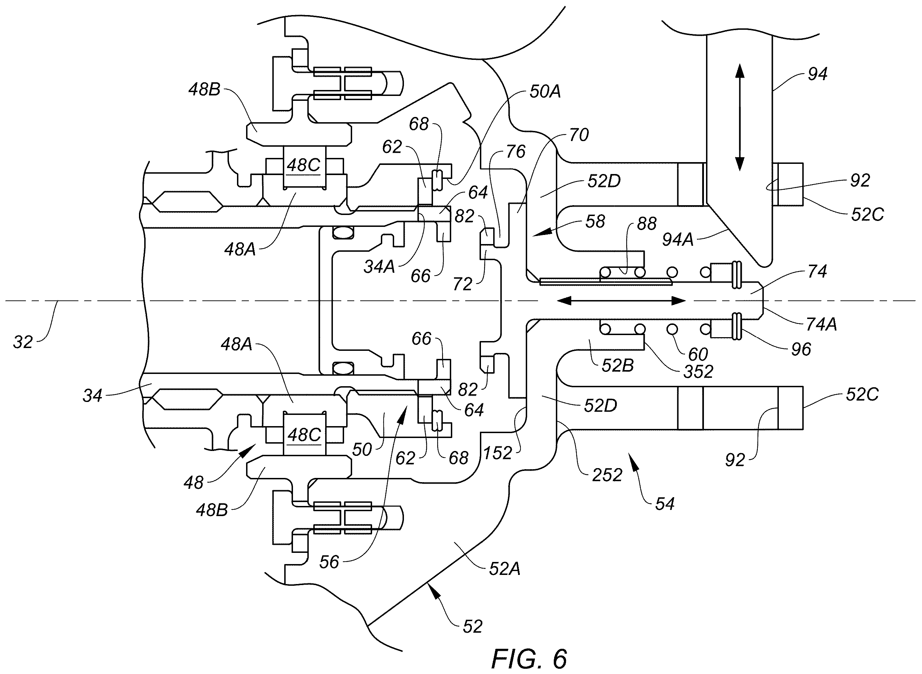

In the embodiment shown in FIG. 2, the bearing housing 52 includes a bearing enclosure portion 52A, a piston shaft collar 52B, a pair of tool posts 52C, and is disposed about an axial centerline 32. The bearing enclosure portion 52A includes side walls that extend from a forward end to an end plate 52D, collectively forming an interior cavity. The end plate 52D has a forward axial surface 152 and an aft axial surface 252. The piston shaft collar 52B extends axially out from the aft axial surface 252 of the end plate 52D to a collar distal end surface 352. A central bore 86 extends through the piston shaft collar 52B and the end plate 52D. A spring seat bore 88 extends axially inward a distance from the collar distal end surface 352 and is concentric with the central bore 86. In some embodiments, the central bore 86 may include a portion of a spline arrangement 78 (see FIGS. 2 and 2A) for engagement with the spring shaft 74; e.g., the spline arrangement 78 may be a male / female arrangement. For example, the central bore 86 may include a slot 86A (see FIG. 2A) configured to receive a rib 90 attached to the spring shaft 74. The spline arrangement 78 is configured to allow axial movement of the retainer piston 58 relative to the bearing housing 52 and to prevent rotational movement of the retainer piston 58 /spring shaft 74 relative to the bearing housing 52. The present disclosure is not limited to any particular spline arrangement; e.g., bearing housing 52 / retainer piston 58 configurations that allow relative axial movement and prevent relative rotational movement may be used alternatively. The tool posts 52C extend axially outward from the aft axial surface 252 of the end plate 52D. The tool posts 52C are disposed on opposite sides of the axial centerline 32, spaced apart from the piston shaft collar 52B. Each tool post 52C includes a tool aperture 92 configured to receive an actuating tool 94 (see FIG. 6) configured to cause linear translation of the retainer piston 58. The bearing housing 52 configuration having a pair of tool posts 52C is an example of structure that may be included to facilitate actuation of the retainer piston 58 and the present disclosure is not limited thereto; e.g., a single tool post 52C may be included, or more than two tool posts 52C may be included, or a concentric body (not shown) may be utilized in place of the tool posts 52C, or the like.

Still referring to FIG. 2, the shaft retention system 54 is shown with the spring shaft 74 of the retainer piston 58 received within the central bore 86 of the bearing housing 52. As detailed herein, the engagement between the spring shaft 74 and the central bore 86 may be such that relative movement between the spring shaft 74 and the central bore 86 is limited to axial movement of the spring shaft 74 relative to the central bore 86. As shown in FIG. 2, the shaft retention system 54 includes a piston spring 60 acting between the spring seat bore 88 disposed in the piston shaft collar 52B and a mechanical retainer 96 attached to the spring shaft 74. In the example shown in FIG. 2, the mechanical retainer 96 is a washer and a retainer clip (e.g., a snap ring) that is engaged with the retainer channel 80 ( see FIG. 4A) disposed in the spring shaft 74. The present disclosure is not limited to the mechanical retainer 96 shown in FIG. 2; e.g., the mechanical retainer 96 may be a nut threaded onto the spring shaft 74, or a pin or clip extending through the spring shaft 74, or the like. The piston spring 60 acting between the spring seat bore 88 and the mechanical retainer 96 functions to bias the retainer piston 58 in a disengaged configuration. As will be detailed herein, the piston spring 60 may be compressed to permit the retainer piston 58 into an engaged configuration. The term "bias" is used to refer to the spring force (or "biasing force") produced by the piston spring 60 that acts between the spring seat bore 88 and the mechanical retainer 96. The piston spring 60 (e.g., a helical spring) has a spring rate that represents the amount of force needed to compress the piston spring 60 a predetermined distance. It is assumed, but not required, that the spring rate is linear. Hence, the biasing force produced by the piston spring 60 is a function of the amount that the piston spring 60 is compressed. In the disengaged configuration, the piston spring 60 may be compressed an amount that enables the piston spring 60 to hold the primary flange 70 of the retainer piston 58 in close proximity or in contact with a predetermined surface such as the forward axial surface 152 of the bearing housing end plate 52D. In this disengaged configuration, the retainer piston 58 is spaced apart from the shaft retainer cap 56 and will not engage with the shaft retainer cap 56 during operation of the gas turbine engine 20. To arrive at the engaged position, the retainer piston 58 is axially translated forward to a position wherein the retainer piston 58 can engage with the shaft retainer cap 56. The forward axial translation of the retainer piston 58 causes the piston spring 60 to compress. Hence, the piston spring 60 biases the retainer piston 58 in an aft axial direction and resists forward axial translation of the retainer piston 58.

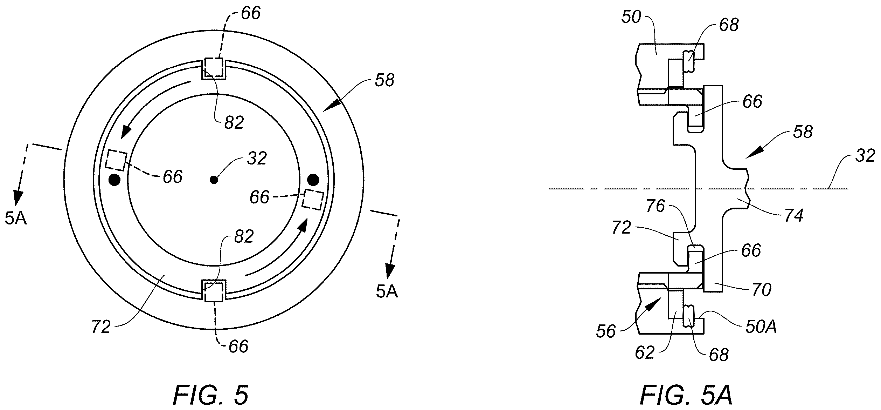

FIGS. 5 and 5A diagrammatically illustrate a pair of lugs 66 of a shaft retainer cap 56 disposed in corresponding slots 82 disposed in a secondary flange 72 of a retainer piston 58. FIG. 5 also diagrammatically illustrates the lugs 66 rotated counterclockwise. FIG. 5A diagrammatically illustrates the lugs 66 extending into the annular channel 76 of the retainer piston 58 disposed between the primary flange 70 and the secondary flange 72; e.g., in a configuration like that diagrammatically shown by the lugs 66 rotated counterclockwise in FIG. 5. In this configuration (i.e., an engaged configuration), the shaft retainer cap 56 and the retainer piston 58 are coupled.

FIG. 6 illustrates a shaft retention system 54 embodiment like that diagrammatically shown in FIG. 2, wherein the shaft retention system 54 is disposed in a disengaged configuration. In the disengaged configuration, the piston spring 60 biases the retainer piston 58 in an aft direction maintaining the retainer piston 58 out of engagement with the shaft retainer cap 56.

During an inspection, maintenance, or repair procedure wherein a technician desired to remove the sections of the engine 20 (e.g., a "hot section removal"), the gas turbine engine 20 is not under power and the low pressure shaft 34 is stationary. As will be detailed herein, the low pressure shaft 34 may be manually rotated, but is not rotated as a result of engine power.

According to aspects of the present disclosure, the shaft retention system 54 may be used to axially secure the low pressure shaft 34, and thereby facilitate the desired inspection, maintenance, or repair procedure.

FIG. 6 diagrammatically illustrates an actuating tool 94 extending into the tool aperture 92 of a first tool post 52C of the bearing housing 52. As shown in FIG. 6, the actuating tool 94 is not engaged with the retainer piston 58, and therefore has not caused axial translation of the retainer piston 58 and/or compression of the piston spring 60.

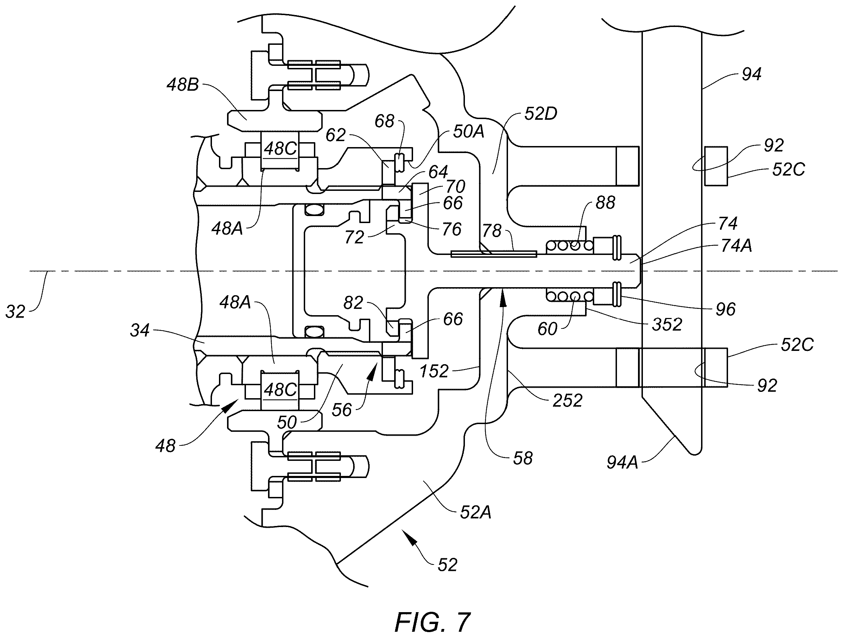

Insertion of the actuating tool 94 in a direction perpendicular to the axial centerline 32 of the shaft retention system 54 causes the actuating tool 94 to engage the distal end 74A of the spring shaft 74 of the retainer piston 58. The actuating tool 94 shown in FIG. 6 has an angularly disposed cam surface 94A that linearly increases the axial translation of the retainer piston 58. Continued insertion will cause the slot(s) 82 disposed in the secondary flange 72 of the retainer piston 58 to be in a position to receive the lug(s) 66 of the shaft retainer cap 56. The spline arrangement 78 between the central bore 86 of the bearing housing 52 and the spring shaft 74 of the retainer piston 58 allows the retainer piston 58 to translate axially without rotation. The low pressure shaft 34 of the engine 20 can be rotated to align the slot(s) 82 disposed in the secondary flange 72 of the retainer piston 58 with the lug(s) 66 of the shaft retainer cap 56. Once the slot(s) 82 and lug(s) 66 are aligned, the shaft retention system 54 embodiment is disposed in the engaged configuration and the actuating tool 94 can be fully inserted between the tool posts 52C; e.g., see FIG. 7. Subsequently, the low pressure shaft 34 can be rotated so that the lug(s) 66 is disposed within the annular channel 76 disposed between the primary flange 70 and the secondary flange 72 of the shaft retainer cap 56. In those embodiments that include rotational limit features 84, the features 84 will limit the rotation of the low pressure shaft 34 relative to the retainer piston 58 and provide an indication that the low pressure shaft 34 is retained. Once the low pressure shaft 34 is retained, the inspection, maintenance, or repair procedure can be initiated. Once the inspection, maintenance, or repair procedure is completed, the low pressure shaft 34 can be rotated until the lug(s) 66 is once again aligned with the slot 82. As the actuating tool 94 is removed, the piston spring 60 will bias the retainer piston 58 towards the disengaged position. When the actuating tool 94 is completely removed, the retainer piston 58 will be maintained in the disengaged position by the piston spring 60.

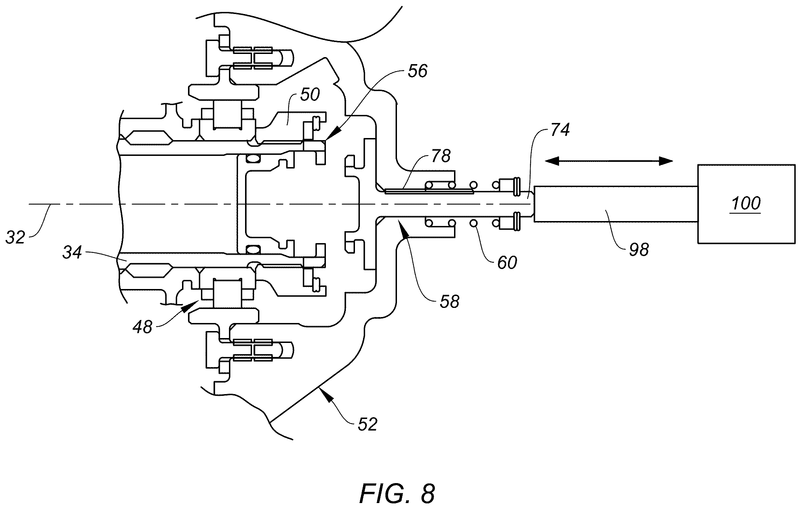

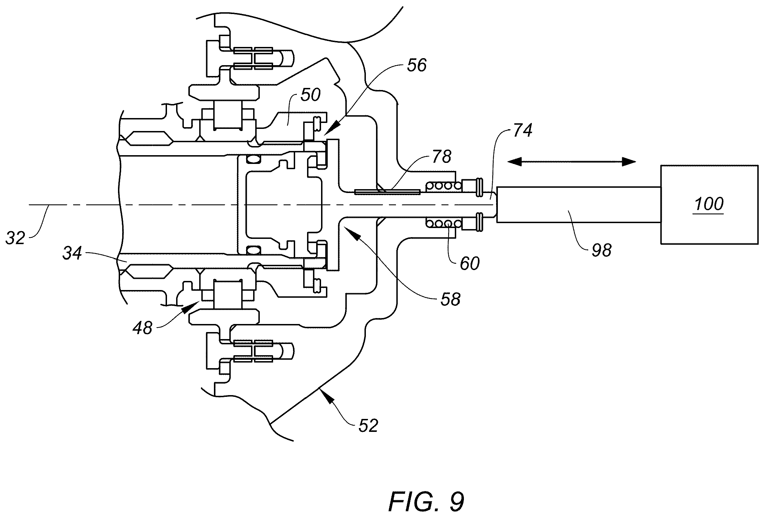

FIGS. 8 and 9 illustrate another non-limiting example that utilizes the same retainer piston 58, shaft retainer cap 56, and piston spring 60 arrangement shown in FIGS. 6 and 7. In this embodiment, the bearing housing 52 does not include a tool post 52C and does not utilize an actuating tool 94 like that diagrammatically shown in FIGS. 6 and 7. In place thereof, this embodiment utilizes a pushrod 98 and an actuator 100. The pushrod 98 is axially aligned and in contact with the retainer piston 58. The actuator 100 is configured to axially translate the pushrod 98 to actuate the shaft retention system 54 from the disengaged configuration to the engaged configuration.

As stated above, the present disclosure does not require a shaft retention system 54 and is not limited to the shaft retention system 54 examples shown in FIGS. 2-9 and described herein.

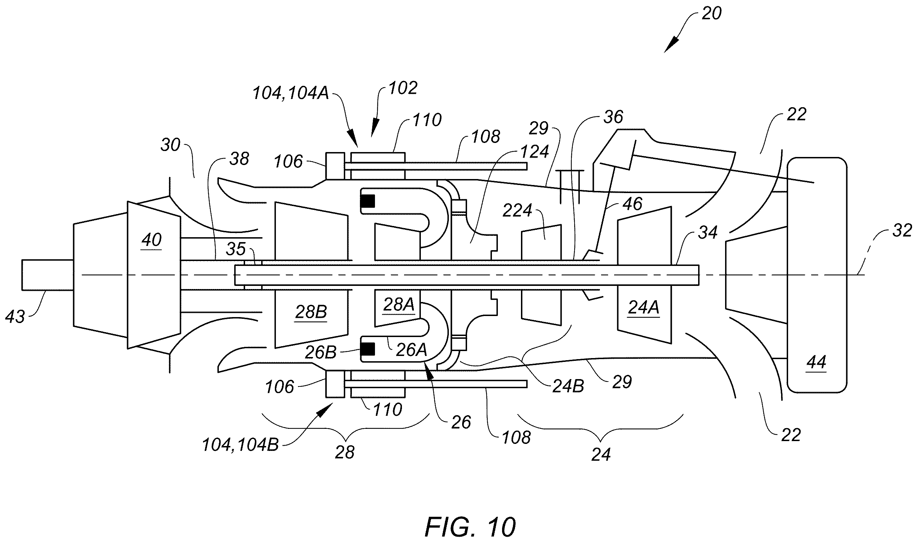

Aspects of the present disclosure include a linear guide system 102 configured to provide support and guidance to hot section components during the removal and/or installation of those hot section components. The linear guide system 102 includes a plurality of rail and guide block assemblies 104. FIG. 10 diagrammatically illustrates a first rail and guide block assembly 104A and a second rail and guide block assembly 104B disposed at diametrically opposed positions; e.g., the first rail and guide block assembly 104A is disposed at a circumferential zero degree position and the second rail and guide block assembly 104B is disposed at a circumferential one hundred and eighty degree position. Another linear guide system 102 configuration may include rail and guide block assemblies 104 disposed at the circumferential zero degree position, the circumferential ninety degree position, the circumferential one hundred and eighty degree position, and the circumferential two hundred and seventy degree position. The present disclosure is not limited to these rail and guide block assembly 104 positioning examples.

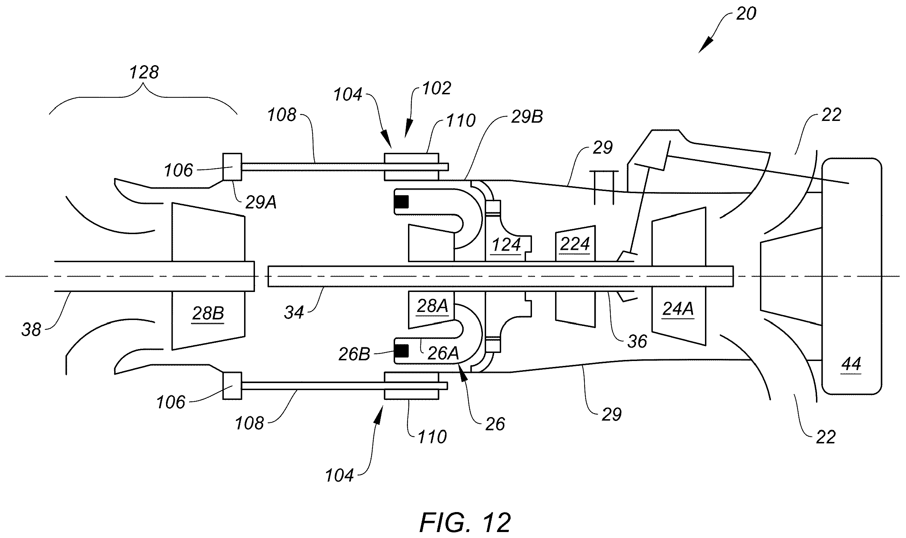

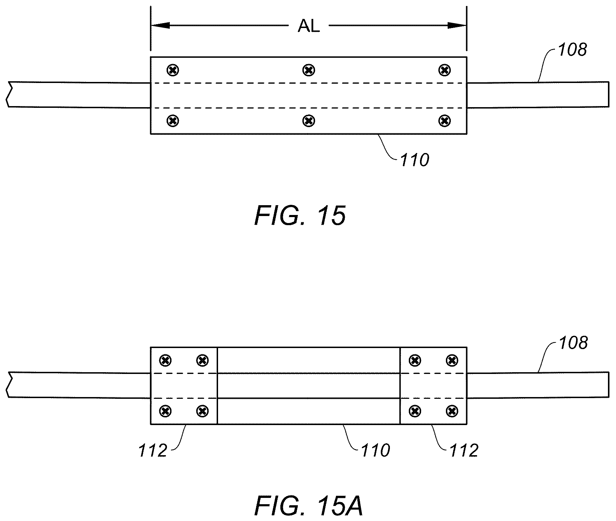

Each rail and guide block assembly 104 includes a rail head 106, a rail 108, and a guide block 110. The rail 108 is attached to and extends out from the rail head 106. The rail 108 is either permanently fixed to the rail head 106 or can be secured to the rail head 106 to prevent relative movement therebetween. The rail 108 has a constant cross-sectional geometry along the axial length of the rail 108. Non-limiting examples of rail 108 cross-sectional geometries include circular, rectangular, or the like. The guide block 110 is configured to receive the rail 108 (e.g., within an aperture) and allow the rail 108 to linearly traverse relative to the guide block 110. In preferred embodiments, the guide block 110 interfaces with the rail 108 over the axial length ("AL") of the guide block 110 (e.g., see FIG. 15), or at multiple saddle points 112 distributed over the axial length of the guide block 110 (e.g., see FIG. 15A), or the like. In this manner, the linear travel of the rail 108 more readily maintains alignment; e.g., parallel alignment with the centerline 32 of the engine 20. The specific interface between the guide block 110 and the rail 108 may be a mating male and female interface that may include one or more bearings to facilitate relative movement. In the diagrammatic example shown in FIG. 10, the guide blocks 110 are attached to a first segment 29A of the engine casing 29 disposed radially outside of the combustor 26 and the rail heads 106 are attached to a second segment 29B of the engine casing 29 disposed radially outside of the LPT 28B. When the engine 20 is in assembled form, the first and second engine casing segments 29A, 29B are contiguous with one another and are typically connected to one another. It should be noted that the present disclosure does not require the guide block 110 of a rail and guide block assembly 104 to be attached to an engine casing segment 29A, 29B and does not require the rail head 106 of a rail and guide block assembly 104 to be attached to an engine casing segment. The guide block 110 may be mounted to any component that is stationary with the engine 20 proximate the combustor 26, and the rail head 106 may be mounted to any component that travels axially with the LPT 28B module during assembly and removal. The rails 108 extend axially from the rail heads 106 and are received within the guide blocks 110. As will be detailed herein, FIG. 12 diagrammatically illustrates an LPT module 128 being axially moved relative to the combustor 26 and the rest of the engine 20 and the rail and guide block assemblies 104 are extended, guiding the relative movement.

During an inspection, maintenance, or repair procedure wherein a technician desired to remove the sections of the engine 20 (e.g., a "hot section removal"), the gas turbine engine 20 is not under power and the low pressure shaft 34 is stationary. The low pressure shaft 34 may be axially retained using a shaft retention system 54 as described herein. As indicated herein, the present disclosure does not require that a shaft retention system 54 be used.

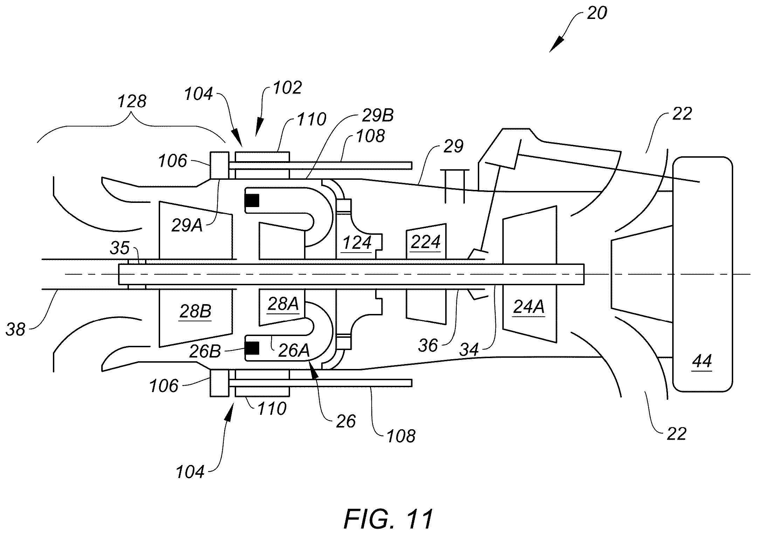

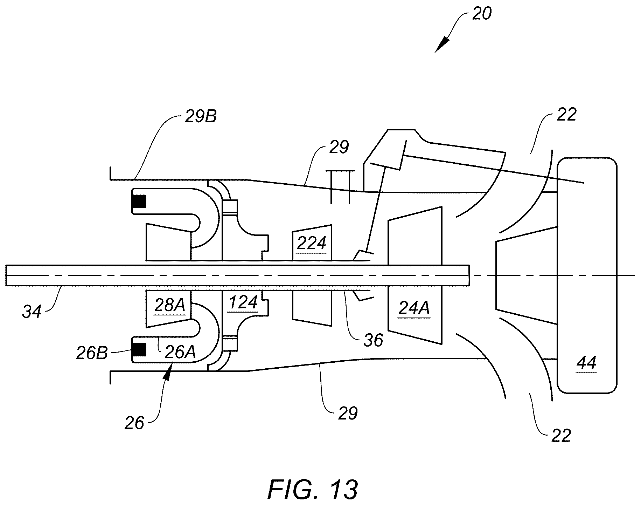

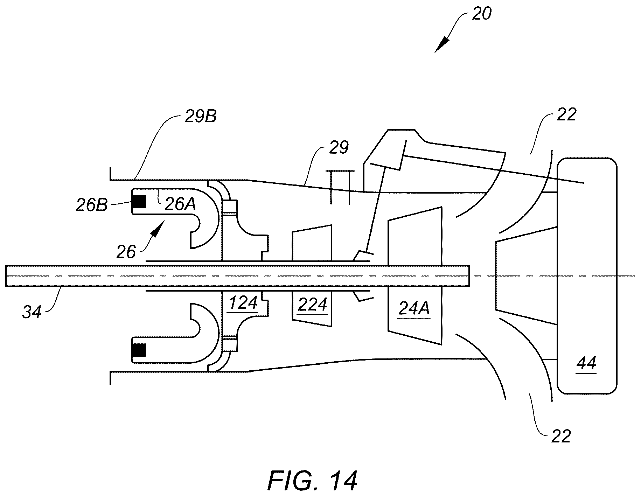

FIGS. 10-14 diagrammatically illustrate consecutive stages of disassembly that provide access to the entire hot section of the engine 20. As indicated herein, the engine 20 includes an output shaft 38, an RGB 40, and a propulsion unit 42 that includes a propeller; e.g., see FIG. 1. FIG. 10 illustrates the gas turbine engine 20 with a present disclosure linear guide system 102 mounted on the engine 20. In FIG. 10, the propulsion unit 42 is removed from the engine 20. FIG. 11 illustrates the gas turbine engine 20 with the RGB module (including the RGB 40 and the output drive shaft 38 that is driven by the LP shaft 34 by a splined arrangement 35) removed from the engine 20. Up to this point, the low pressure shaft 34 (and attached components, including the including the LPT 28B and the output shaft 38) is supported at the aft end of the engine 20 by bearings located adjacent the aft end of the low pressure shaft 34 (e.g., bearings 48 as shown in FIG. 2) and by forward located bearings (not shown) as part of the LPT module 128. FIG. 12 diagrammatically illustrates a present disclosure linear guide system 102 guiding the LPT module 128 (including the LPT 28B and the output shaft 38) as it is being axially separated from the remainder of the gas turbine engine 20. FIG. 13 illustrates the gas turbine engine 20 with the LPT module 128 and the linear guide system 102 now removed. As can be seen from FIG. 13, with the LPT module 128 removed, the HPT 28A is clearly accessible. FIG. 14 illustrates the engine 20 with the HPT 28A removed. As can be seen from FIG. 14, with the HPT 28A removed, the fuel nozzles 26B and the combustor liners 26A are clearly accessible.

The present disclosure provides a system and a method for removal and/or installation of hot section components that not only facilitates the removal and/or installation, but also protects the components in the process. The present disclosure linear guide system 102 prevents the low pressure shaft 34 and associated components (e.g., the LPT module 128) from gravitationally dropping during removal and/or installation and provides alignment as the components are axially combined. Component misalignment and/or component gravitational dropping can result in damage to bearings, seals, rotational parts, and the like. The present disclosure linear guide system 102 may be used in an off-wing engine assembly or disassembly. Importantly, however, this aspect of the present disclosure may also be utilized during on-wing engine assembly or disassembly. In addition, the FIGS. illustrate the present disclosure linear guide system 102 in use with an engine that disposed in a horizontal orientation. The present disclosure is not limited thereto; e.g., the linear guide system 102 may be used when the engine is disposed in an orientation other than horizontal such as a vertical orientation, as well as on-wing engines and off-wing engines.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted is a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A linear guide system for use in the assembly or disassembly of a gas turbine engine, wherein the gas turbine engine includes a compressor section, a combustor, a turbine section, an engine shaft that is engaged with the compressor section and the turbine section and extends along an axial centerline of the engine, and an engine casing having a first engine casing segment and a second engine casing segment that are axially separable from one another, wherein the linear guide system comprises:
a plurality of rail and guide block assemblies, wherein each rail and guide block assembly of the plurality of rail and guide block assemblies includes a rail head, a rail, and a guide block, wherein:
the rail is fixedly attached to the rail head and extends axially out from the rail head;
the rail head is configured for attachment to the first engine casing so that an axial length of the rail is disposed parallel to the axial centerline of the engine; and
the guide block is configured for attachment to the second engine casing, and is configured to receive the rail in a manner that permits linear traverse of the rail relative to the guide block.

2. The linear guide system of claim 1, wherein the plurality of rail and guide block assemblies includes a first rail and guide block assembly and a second rail and guide block assembly.

3. The linear guide system of claim 1, wherein the plurality of rail and guide block assemblies includes more than two rail and guide block assemblies of the plurality of rail and guide block assemblies, and the rail and guide block assemblies are equidistantly spaced apart from one another around a circumference of the engine casing.

4. The linear guide system of any preceding claim, wherein each said rail has a cross-sectional geometry normal to the axial length of the rail that is constant along the axial length.

5. The linear guide system of claim 4, wherein each said rail has a circular cross-sectional geometry.

6. The linear guide system of claim 4, wherein each said rail has a rectangular cross-sectional geometry.

7. The linear guide system of any preceding claim, wherein of the rail and the guide block of each said rail and guide block assembly are configured as a mating male and female pair.

8. The linear guide system of claim 7, wherein of the guide block of each said rail and guide block assembly is configured to interface with the rail of the respective rail and guide block assembly for a length of the guide block.

9. A method of removing an engine module from a gas turbine engine, wherein the gas turbine engine includes a compressor section, a combustor, a turbine section, an engine shaft that is engaged with the compressor section and the turbine section and extends along an axial centerline of the engine, and an engine casing having a first engine casing segment and a second engine casing segment that are axially separable from one another, the engine module being attached to the first engine casing segment wherein the method comprises:
providing a plurality of rail and guide block assemblies, wherein each rail and guide block assembly of the plurality of rail and guide block assemblies includes a rail head, a rail, and a guide block, wherein within each rail and guide block assembly the rail is fixedly attached to the rail head and extends axially out from the rail head;
attaching the rail head of each rail and guide block assembly to the first engine casing segment so that an axial length of the rail is disposed parallel to the axial centerline of the engine;
attaching the guide block of each rail and guide block assembly to the second engine casing segment so that the rail is received within an aperture disposed in the guide block, and the rail is disposed in the guide block in a manner that permits linear traverse of the rail relative to the guide block; and
removing the engine module from the gas turbine engine by axially translating the first engine casing segment from the second engine casing segment with the plurality of rail and guide block assemblies guiding the axial translation.

10. The method according to claim 9, wherein:
the plurality of rail and guide block assemblies includes a first rail and guide block assembly and a second rail and guide block assembly that are disposed diametrically opposite one another; or
the plurality of rail and guide block assemblies includes more than two rail and guide block assemblies of the plurality of rail and guide block assemblies, and the rail and guide block assemblies are equidistantly spaced apart from one another around a circumference of the engine casing.

11. The method according to claim 9 or 10, wherein:
the engine module includes a low pressure turbine; and/or
the engine module includes an output shaft configured for drive engagement with the low pressure turbine.

12. The method according to any of claims 9 to 11, further comprising removing a high pressure turbine and a component of the combustor after the high pressure turbine is removed.

13. The method according to any of claims 9 to 12, wherein:
the method is performed with the engine on-wing; or
the method is performed with the engine off-wing.

14. The method according to any of claims 9 to 13, further comprising axially retaining the engine shaft prior to removing the engine module from the gas turbine engine.

15. A method of installing an engine module into a gas turbine engine, wherein the gas turbine engine includes a compressor section, a combustor, a turbine section, an engine shaft that is engaged with the compressor section and the turbine section and extends along an axial centerline of the engine, and an engine casing having a first engine casing segment and a second engine casing segment that are axially separable from one another, the engine module being attached to the first engine casing segment, wherein the method comprises:
providing a plurality of rail and guide block assemblies, wherein each rail and guide block assembly of the plurality of rail and guide block assemblies includes a rail head, a rail, and a guide block, wherein within each rail and guide block assembly the rail is fixedly attached to the rail head and extends axially out from the rail head;
attaching the rail head of each rail and guide block assembly to the first engine casing segment;
attaching the guide block of each rail and guide block assembly to the second engine casing segment; ;
disposing the rail of each rail and guide block assembly into the guide block of that respective rail and guide block assembly; and
axially translating the first engine casing segment and attached engine module into engagement with the second engine casing segment guided by the plurality of rail and guide block assemblies,
optionally wherein:
the engine module includes a low pressure turbine; and/or
the engine module includes an output shaft configured for drive engagement with the low pressure turbine.
